**Europäisches Patentamt**

**European Patent Office**

**Office européen des brevets**

(11) Veröffentlichungsnummer : **0 056 121**
**B1**

# (12) EUROPÄISCHE PATENTSCHRIFT

(45) Veröffentlichungstag der Patentschrift :
07.08.85

(21) Anmeldenummer : 81110344.9

(22) Anmeldetag : 11.12.81

(51) Int. Cl.⁴ : **C 08 G 18/42, C 08 G 18/48,**
**C 08 G 63/20, C 08 G 65/28**

(54) Verfahren zur Herstellung von flexiblen Polyurethan-Weichschaumstoffen sowie hierzu verwendbare Polyester-polyol-Polyether-polyol-Mischungen.

(30) Priorität : 10.01.81 DE 3100524

(43) Veröffentlichungstag der Anmeldung :
21.07.82 Patentblatt 82/29

(45) Bekanntmachung des Hinweises auf die Patenterteilung : 07.08.85 Patentblatt 85/32

(84) Benannte Vertragsstaaten :
AT BE CH DE FR GB IT LI NL SE

(56) Entgegenhaltungen :
EP-A- 0 004 617
DE-A- 1 720 843
US-A- 4 021 379
Patent Abstracts of Japan Band 4, Nr. 61, 8. Mai 1980,
Seite 14C9
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Decker, Walter
Koenigsbacher Strasse 72
D-6700 Ludwigshafen (DE)
Erfinder : Schoen, Ernst, Dr.
Burgunderstrasse 40
D-6730 Neustadt (DE)
Erfinder : Grabhoefer, Herbert, Dr.
Londoner Ring 70
D-6700 Ludwigshafen (DE)
Erfinder : Weyland, Peter, Dr.
Ludwigshafener Strasse 12A
D-6710 Frankenthal (DE)

# 0 056 121

**Beschreibung**

Die Erfindung betrifft ein Verfahren zur Herstellung von flexiblen Polyurethan-Weichschaumstoffen mit einer gutern Hydrolysestabilität, einer verbesserten Dämpfung bei gleichem oder höherem Niveau der übrigen mechanischen Eigenschaften und einem hohen Schallabsorptionsvermögen durch Umsetzung von organischen Polyisocyanaten und Mischungen aus

a) flüssigen Polyester-polyolen, die hergestellt werden durch Polykondensation von organischen Dicarbonsäuren und einer Polyolmischung, die enthält : Butandiol-1,4, Pentadiol-1,5, Hexandiol-1,6 und mindestens ein Triol und

b) di- bis tetrafunktionellen Polyether-polyolen mit Molekulargewichten von 1 500 bis 6 000

in Gegenwart von Katalysatoren und Treibmitteln sowie gegebenenfalls Kettenverlängerungsmitteln, Hilfs- und Zusatzstoffen.

Ausgewählte Polyester-polyol-Polyether-polyol-Mischungen, die nach dem erfindungsgemäßen Verfahren verarbeitbar sind, zeichnen sich durch eine verbesserte Verträglichkeit der Komponenten und Lagerbeständigkeit aus.

Die Herstellung von Polyurethan-Weichschaumstoffen ist bekannt und wird in der einschlägigen Fachliteratur ein-gehend beschrieben. Verweisen möchten wir beispielsweise auf das Kunststoff-Handbuch, Band VII, « Polyurethane » von R. Vieweg und A. Höchtlen, Carl Hanser Verlag, München, 1966.

Zur Herstellung der Polyurethan-Weichschaumstoffe werden neben Katalysatoren, Treibmitteln sowie Hilfs- und Zusatz-stoffen, als Polyisocyanate üblicherweise Toluylen-diisocyanate oder zur Verminderung der Toxizität und Erhöhung der Reaktivität Mischungen aus Toluylen-diisocyanaten und eines Gemisches aus Diphenylmethan-diisocyanaten und Polyphenyl-polymethylen-polyisocyanaten verwendet.

Als Polyhydroxylverbindungen in Betracht kommen vorzugsweise Polyether-polyole, insbesondere solche auf Basis von Ethylen-und/oder Propylenoxid. Nachteilig an den auf dieser Basis hergestellten Polyurethan-Weichschaumstoffen ist das allgemeine mechanische Eigenschaftsniveau, das nicht allen Anwendungsbereichen gerecht wird.

Sofern spezielle Anforderungen an das mechanische Eigenschaftsniveau von Polyurethan-Weichschaumstoffen für besondere Anwendungsbereiche gestellt werden, können zu deren Herstellung anstelle von Polyether-polyolen auch Polyester-polyole eingesetzt werden. Die erhaltenen Schaumstoffe besitzen jedoch nur eine geringe Hydrolysebeständigkeit.

Zur Verminderung dieser Nachteile wird in der DE-A-28 15 540 ( = EP-A-0 004 617) vorgeschlagen, zur Herstellung von Polyurethan-Weichschaumstoffen bestimmte Ausgangskomponenten auszuwählen und als Polyisocyanate eine gegebenenfalls urethangruppenhaltige Mischung aus Diphenylmethan-diisocyanaten und Polyphenyl-polymethylen-polyisocyanaten mit einem Gehalt an Diphenylmethan-diisocyanat-Isomeren von 55 bis 85 Gew.-%, als Polyhydroxylverbindungen Polyesterpolyole oder Mischungen aus Polyester-polyolen und Poly-ether-polyolen mit einem Polyester-polyolgehalt von mindesten 60 Gew.-% und als Treibmittel Wasser oder Mischungen aus Wasser und niedrigsiedenden, gegebenenfalls halogenhaltigen Kohlenwasserstoffen zu verwenden. Besonders erwähnt werden Polyester-polyole mit einem Molekular-gewicht von 750 bis 5 000 und einer Funktionalität von 2 bis 3,5, die durch Polykondensation eines Dicarbonsäuregemisches aus Bernstein-, Glutar- und Adipinsäure in bestimmten Mengenverhältnissen und 2- und 3-wertigen Alkoholen hergestellt werden. Auf diese Weise können Poly-urethan-Weichschaumstoffe mit einer hohen Trag- und Energieabsorptionsfähigkeit sowie einer beachtlichen Hydrolysenbeständigkeit erhalten werden.

Gewisse Schwierigkeiten können jedoch auch nach diesem Verfahren bei der Verarbeitung von Polyester-polyol-Polyether-polyol-Mischungen auftreten, da die beschriebenen Polyester-polyole und Polyether-polyole ein richtiges Mischen erfordern, um eine Phasentrennung zu vermeiden. Dieses chemische Verhalten ist nicht überraschend, da aus der Literatur bekannt ist, daß Polyester-polyole und Polyether-polyole für Polyurethan-Weichschaumstoffe nicht mischbar sind (Kunststoff-Handbuch, Band VII, « Polyurethane » von R. Vieweg und A. Höchtlen, Carl Hanser Verlag, München, 1966, Seite 52).

Da schon kleine Anteile Polyester-polyol im Polyetherpolyol und umgekehrt die Verarbeitbarkeit des einen oder anderen stören können, wobei im erhaltenen Schaumstoff Risse, Lunker und Zellstörungen auftreten, die bis zum Schaumkollaps führen, müssen Tanks, Leitungen und Verschäumungsanlagen beim Übergang von Polyester-polyolen auf Polyether-polyolen und umgekehrt peinlichst gesäubert werden.

Ein anderer Nachteil ist die geringe Hydrolysestabilität von handelsüblichen Polyester-polyolen, die auch durch den Einbau in das Polyurethan-Schaumstoffgerüst nicht vermindert wird.

Aufgabe der vorliegenden Erfindung war es, flexible Polyurethan-Weichschaumstoffe mit guter Hydrolysebeständigkeit und verbesserten mechanischen Eigenschaften, insbesondere einer hohen Stauchhärte bei günstigen Dämpfungsverhalten herzustellen.

Diese Aufgabe konnte überraschenderweise durch die Verwendung von Mischungen aus speziellen Polyester-polyolen und Polyether-polyolen als Polyhydroxylverbindungen bei der Herstellung der Polyurethan-Weichschaumstoffe gelöst werden.

2

# 0 056 121

Gegenstand der vorliegenden Erfindung ist somit ein Verfahren zur Herstellung von flexiblen Polyurethan-Weich-Schaumstofen durch Umsetzung von organischen Polyisocyanaten, Polyhydroxylverbindungen und gegebenenfalls Kettenverlängerungsmitteln in Gegenwart von Katalysatoren und Treibmitteln sowie ggf. Hilfs- und Zusatzstoffen, das dadurch gekennzeichnet ist, daß man als Polyhydroxylverbindungen Mischungen verwendet aus :

a) flüssigen Polyester-polyolen mit Hydroxylzahlen von 40 bis 80 und Molekulargewichten von 1 500 bis 5 000, die hergestellt werden durch Polykondensation von organischen Dicarbonsäuren mit einer Polyolmischung, die bezogen auf das Gesamtgewicht enthält :

10 bis 50 Gew.-% Butandiol-1,4
30 bis 60 Gew.-% Pentandiol-1,5
 8 bis 35 Gew.-% Hexandiol-1,6 und
 2 bis 15 Gew.-% mindestens eines Triols und

b) di- bis tetrafunktionellen Polyether-polyolen mit Molekulargewichten von 1 500 bis 6 000.

Gegenstand der vorliegenden Erfindung sind ferner Polyester-polyol-Polyether-polyol-Mischungen, die im wesentlichen bestehen aus

a) 10 bis 20 Gew.-%, bezogen auf das Gesamtgewicht der Komponenten (a) und (b) eines flüssigen Polyester-polyols mit einer Hydroxylzahl von 40 bis 80, hergestellt durch Polykondensation von Adipinsäure mit einer Polyolmischung, die bezogen auf das Gesamt-gewicht enthält

10 bis 50 Gew.-% Butandiol-1,4
30 bis 60 Gew.-% Pentandiol-1,5
 8 bis 35 Gew.-% Hexandiol-1,6 und
 2 bis 15 Gew.-% Glycerin und/oder Trimethylolpropan und

b) 90 bis 80 Gew.-%, bezogen auf das Gesamtgewicht der Komponenten (a) und (b) eines Glycerin und/oder Trimethylolpropan initiierten Polyoxypropylen-Polyoxyethylentriols mit einer Hydroxylzahl von 28 bis 60.

Überraschenderweise zeigte sich, daß die verwendbaren Mischungen aus Polyester-polyolen und Polyether-polyolen in Mengen von 5 bis 50 Gew.-% zu 95 bis 50 Gew.-%, bezogen auf das Gesamtgewicht, gut miteinander verträglich und mischbar sind. Besonders ausgewählte Mischungen sind ferner mehr als 6 Monate lagerstabil, so daß sie als Polyurethan-Systeme versandt werden können.

Die erfindungsgemäß hergestellten Polyurethan-Weichschaumstoffe besitzen eine sehr hohe Stauchhärte bei gleichzeitig verbessertem Dämpfungsverhalten. Dadurch ergeben sich völlig neue bisher nicht erreichbare Eigenschaftskombinationen für hochbeanspruchte Fahrzeugsitze aus Polyurethanweichschaumstoff. Der Stauchhärteabfall nach der Feuchtigkeitsalterung gemäß DIN 53 578 ist sehr klein und entspricht etwa dem Abfall der Stauchhärte eines reinen Polyether-Polyurethan-Weichschaumstoffs. Die Produkte zeichnen sich ferner durch eine hervorragende Schallabsorption im Frequenzbereich $2-6 \cdot 10^3$ Hertz aus. Sie können außerdem nach den Methoden der Hochfrequenz-Verschweißung und Flammkaschierung verarbeitet werden.

Für die Herstellung der flexiblen Polyurethan-Weichschaumstoffe nach dem erfindungsgemäßen Verfahren werden als Polyhydroxylverbindungen Mischungen aus

a) 5 bis 50 Gew.-%, vorzugsweise 10 bis 20 Gew.-%, mindestens eines flüssigen Polyester-polyols aus den genannten Aufbaukomponenten mit einer Hydroxylzahl von 40 bis 80, vorzugsweise 45 bis 70, und einem Molekulargewicht von 1 500 bis 5 000, vorzugsweise 1 700 bis 4 000 und
b) 95 bis 50 Gew.-%, vorzugsweise 90 bis 80 Gew.-% mindestens eines di- bis tetrafunktionellen Polyether-polyols mit einem Molekulargewicht von 1 500 bis 6 000, vorzugsweise 3 000 bis 4 000 verwendet, wobei die Gew.-% bezogen sind auf das Gesamtgewicht der Komponenten (a) und (b).

Geeignete Polyester-polyole besitzen beispielsweise eine durchschnittliche Funktionalität von maximal 3,5, vorzugsweise 2,2 bis 3,0 und eine Säurezahl kleiner als 3, vorzugsweise von 0,5 bis 2,0 KOH/g und werden beispielsweise hergestellt durch Polykondensation von organischen Dicarbonsäuren mit 2 bis 12 Kohlenstoffatomen, vorzugsweise aliphatischen Dicarbonsäuren mit 4 bis 6 Kohlenstoffatomen mit den erfindungsgemäß verwendbaren Polyolmischungen. Die auf diese Weise erhaltenen Polyester-polyole können einzeln oder in Form von Gemischen Anwendung finden.

Als organische Dicarbonsäuren kommen beispielsweise in Betracht : aliphatische Dicarbonsäuren, wie Adipin-, Kork-, Azelain- und Sebacinsäure, sowie gegebenenfalls aromatische Dicarbonsäuren, wie Phthalsäure und Isophthalsäure. Die organischen Dicarbonsäuren können dabei sowohl einzeln als auch im Gemisch untereinander verwendet werden. Vorzugsweise verwendet wird jedoch Adipinsäure.

# 0 056 121

Anstelle der freien Dicarbonsäuren können auch die entsprechenden Dicarbonsäurederivate, wie z. B. Dicarbonsäureester von Alkoholen mit 1 bis 4 Kohlenstoffatomen oder Dicarbonsäureanhydrid eingesetzt werden.

Als Polyolmischungen kommen im Sinne der Erfindung solche in Betracht, die bezogen auf das Gesamtgewicht der Polyolmischung enthalten :

10 bis 50 Gew.-%, vorzugsweise 15 bis 40 Gew.-% Butandiol-1,4,
30 bis 60 Gew.-%, vorzugsweise 40 bis 55 Gew.-% Pentandiol-1,5,
8 bis 35 Gew. %, vorzugsweise 12 bis 30 Gew.-% Hexandiol-1,6,
2 bis 15 Gew. %, vorzugsweise 2 bis 10 Gew.-% eines oder mehrerer Triole

Als Triole haben sich Glycerin und Trimethylolpropan besonders bewährt, so daß diese, gegebenenfalls auch als Mischung, vorzugsweise verwendet werden.

Mischungen aus Butan-, Pentan- und Hexandiol können beispielsweise durch katalytische Hydrierung von Mischung aus Bernstein-, Glutar- und Adipinsäure, z. B. entsprechend den Angaben der DE-OS 23 21 101, und anschließender Reinigung der Diolmischungen nach üblichen Methoden erhalten werden.

Die Herstellung der erfindungsgemäß verwendbaren Polyester-polyole erfolgt nach an sich bekannten Verfahren durch Polykondensation von vorzugsweise einer aliphatischen gesättigten Dicarbonsäure oder gegebenenfalls Dicarbonsäuremischung mit der Polyolmischung bei Temperaturen von 100 bis 250 °C, vorzugsweise 130 bis 220 °C, gegebenenfalls in Gegenwart von an sich bekannten Veresterungskatalysatoren, wie organischen Verbindungen von Titan, Vanadium oder Zinn und/oder Wasserschleppmitteln, wie Benzol, Toluol, Xylol, Chlorbenzol zur azeotropen Destillation des Kondenswassers, bevorzugt unter vermindertem Druck in der Endphase der Polykondensation.

Wie bereits dargelegt wurde, eignen sich zum Mischen mit den oben beschriebenen Polyester-polyolen Polyether-polyole mit Molekulargewichten von 1 500 bis 6 000, vorzugsweise 3 000 bis 4 000 und Funktionalitäten von 2 bis 4, vorzugsweise von 2,5 bis 3,5. Die Polyether-polyole werden nach bekannten Verfahren aus einem oder mehreren Alkylenoxiden mit 2 bis 4 Kohlenstoffatomen im Alkylenrest und einem Startermolekül, das 2 bis 4, vorzugsweise 2 bis 3 aktive Wasserstoffatome gebunden enthält, hergestellt. Geeignete Alkylenoxide sind beispielsweise Tetrahydrofuran, 1,3-Propylenoxid, 1,2- bzw. 2,3-Butylenoxid, Styroloxid und vorzugsweise Ethylen- und 1,2-Propylenoxid. Die Alkylenoxide können einzeln, alternierend nacheinander oder in Form von Mischungen polymerisiert werden. Sofern die erhaltenen Polyether-polyole als Endgruppen überwiegend sekundäre Hydroxylgruppen besitzen, werden diese zweckmäßigerweise durch Anpolymerisieren von 3 bis 30 Gew.% Ethylenoxid, bezogen auf das Gesamtgewicht der eingesetzten Alkylenoxide, in primäre Hydroxylgruppen übergeführt und die Polyether-polyole dadurch aktiviert.

Als Startermoleküle kommen beispielsweise in Betracht : Wasser, Ammoniak, Hydrazin, organische Dicarbonsäuren, wie z. B. Bernsteinsäure, Adipinsäure, Phthalsäure und Terephthalsäure, gegebenenfalls N,N'-dialkylsubstituierte Diamine mit 1 bis 4 Kohlenstoffatomen im Alkylrest, wie z. B. gegebenenfalls dialkylsubstituiertes Ethylendiamin, 1,2- bzw. 1,3-Propylendiamin, 1,4-Butylendiamin, 1,6-Hexamethylendiamin, 2,4'-, 2,2'- und 4,4'-Diamino-diphenylmethan, N-Alkyl-dialkanolamine und Trialkanolamine, wie z. B. N-Methyldiethanolamin und Triethanolamin und vorgusweise zwei- bis vierwertige, insbesondere zwei- bis dreiwertige Alkohole, wie z. B. Ethylenglykol, Propylenglykol, Diethylenglykol, Dipropylenglykol, Butylenglykol-1,4, hexamethylenglykol-1,6, Glycerin, Trimethylolpropan und Pentaerythrit. Vorzugsweise verwendet werden Glycerin und Trimethylolpropan.

Gebräuchliche Katalysatoren zur Polymerisation der Alkylenoxide sind Lewissäuren oder deren Komplexsalze mit Carbonsäureanhydriden, Alkalialkoxide mit 1 bis 4 Kohlenstoffatomen im Alkylrest, wie Natrium- und Kaliummethylat, Natrium- und Kaliumethylat, Kaliumisopropylat und Natriumbutylat und vorzugsweise Alkalihydroxide, wie Natriumhydroxid und vorzugsweise Kaliumhydroxid. Der Katalysator wird üblicherweise in einer Menge von 0,002 bis 1,0 Gew.-%, vorzugsweise von 0,01 bis 0,5 Gew.-%, bezogen auf das Gesamtgewicht der Ausgangskomponente verwendet.

Die beschriebenen Polyether-polyole können ebenso wie die erfindungsgemäß verwendbaren Polyester-polyole einzeln oder als Gemische eingesetzt werden.

Als besonders vorteilhaft hat sich die Verwendung von lagerstabilen Mischungen erwiesen, da diese gegebenenfalls als Zweikomponenten-Systeme raumsparend transportiert, zwischengelagert und auf üblichen Verschäumungsanlagen problemlos zu Polyurethan-Weichschaumstoffen mit vorzüglichen mechanischen Eigenschaften verarbeitet werden können. Die lagerstabilen Mischungen bestehen im wesentlichen aus

a) 5 bis 50 Gew.-%, vorzugsweise 10 bis 20 Gew.-%, bezogen auf das Gesamtgewicht der Komponenten (a) und (b) eines flüssigen Polyester-polyols mit einer Hydroxylzahl von 40 bis 80, hergestellt durch Polykondensation von Adipensäure mit einer Polyolmischung, die bezogen auf das Gesamtgewicht enthält :

10 bis 50 Gew.-% Butandiol-1,4
30 bis 60 Gew.-% Pentandiol-1,5

8 bis 35 Gew.-% Hexandiol-1,6 und
2 bis 15 Gew.-% Glycerin und/oder Trimethylolpropan und

b) 95 bis 50 Gew.-%, vorzugsweise 90 bis 80 Gew.-%, bezogen auf das Gesamtgewicht der Komponenten (a) und (b) eines Glycerin und/oder Trimethylolpropan initiierten Polyoxypropylen-Polyoxyethylen-triols mit einer Hydroxylzahl von 28 bis 60.

Gegebenenfalls kann es zweckmäßig sein, z. B. bei der Herstellung von Polyurethan-Weichschaumstoffen nach dem Kaltformschäumverfahren, neben den erfindungsgemäße verwendbaren Mischungen aus Polyester-polyolen und Polyether-polyolen zusätzlich Kettenverlängerungsmittel mitzuverwenden. Als Kettenverlängerungsmittel kommen di- und trifunktionnelle Verbindungen mit Molekulargewichten von 18 bis kleiner als 450, vorzugsweise von 60 bis 300 in Betracht. Vorzugsweise verwendet werden aliphatische Diole mit 2 bis 6 Kohlenstoffatomen, wie z. B. Ethylenglykol, Butylenglykol-1,4 und Hexamethylenglykol, Triole, wie z. B. Glycerin und Trimethylolpropan und Mono-, Di- und Trialkanolamine, wie z. B. Ethanolamin, N-Methyl-diethanolamin und Triethanolamin. Das Gew.-Verhältnis von Mischung aus Polyester-polyol und Polyether-polyol zu Kettenverlängerungsmittel ist abhängig von den gewünschten mechanischen Eigenschaften des Polyurethan-Weichschaumstoffs und beträgt 0 bis 20 Gew.-%, vorzugsweise 5 bis 15 Gew.-% pro Gesamtgewicht der Polyester-polyol-Polyether-polyol-Mischung.

Zur Herstellung der Polyurethan-Weichschaumstoffe nach dem erfindungsgemäßen Verfahren eignen sich vorzugsweise aromatische Di- und Polyisocyanate. Im einzelnen seien beispielhaft genannt : Mischungen aus 2,4'- und 4,4'-Diphenylmethan-diisocyanat, Mischungen aus Diphenylmethan-diisocyanat und Polyphenyl-polymethylen-polyisocyanaten mit einem Gehalt an Diphenylmethan-diisocyanat-Isomeren von 55 bis 85 Gew.-%, vorzugsweise 60 bis 80 Gew.-%, bezogen auf das Gesamtgewicht der Mischung, 2,4- und 2,6-Toluylendiisocyanat sowie die entsprechenden handelsüblichen Isomerenmischungen und Mischungen aus Toluylendiisocyanaten und Gemischen aus Diphenylmethan-diisocyanaten und Polyphenyl-polymethylen-polyisocyanaten mit einem Diphenylmethan-diisocyanatgehalt von 30 bis 80 Gew.-%, vorzugsweise 40 bis 60 Gew.-%, bezogen auf das Gewicht des Gemisches (handelsübliches Roh-MDI).

Häufig werden auch sogenannte modifizierte mehrwertige Isocyanate, d. h. Produkte die durch chemische Umsetzung obiger Di- und/oder Polyisocyanate erhalten werden, verwendet. Als modifizierte organische Di- und Polyisocyananate kommen beispielsweise in Betracht : Carbodiimidgruppen aufweisende Polyisocyanate gemäß DE-PS-1 092 007, Allophanatgruppen aufweisende Polyisocyanate, wie sie z. B. in der britischen Patentschrift 994 890, den ausgelegten Unterlagen des belgischen Patents 761 626 und der NL-OS-7 102 524 beschrieben werden, Isocyanuratgruppen aufweisende Polyisocyanate wie sie z. B. in den DE-PS-1 022 789, 1 222 067 und 1 027 394 sowie den DE-OS-1 929 034 und 2 004 048 beschrieben werden, Urethangruppen aufweisende Polyisocyanate, wie sie z. B. in den ausgelegten Unterlagen des belgischen Patents 752 261 oder der US-PS-3 394 164 beschrieben werden, acylierte Harnstoffgruppen aufweisende Polyisocyanate, z. B. gemäß DE-PS-1 230 778, Biuretgruppen aufweisende Polyisocyanate z. B. gemäß DE-PS-1 101 394 und GB-PS-889 050 ; durch Telomerisationsreaktionen hergestellte Polyisocyanate, z. B. entsprechend den ausgelegten Unterlagen des belgischen Patents 723 640, Ertergruppen aufweisende Polyisocyanate, wie sie z. B. in der GB-PS-965 474 und 1 072 956, der US-PS-3 567 765 und der DE-PS-1 231 688 genannt werden.

Vorzugsweise kommen jedoch zur Anwendung : urethangruppenhaltige Polyisocyanate, beispielsweise mit niedermolekularen Diolen, Triolen oder Polypropylenglykolen modifiziertes 2,4'- und 4,4'-Diphenylmethan-diisocyanat oder Toluylen-diisocyanat, Carbodiimidgruppen und/oder Isocyanuratringe enthaltende Polyisocyanate, z. B. auf Diphenylmethan-diisocyanat und/oder Toluylendiisocyanat-Basis und insbesondere 2,4- und 2,6-Toluylen-diisocyanat sowie die entsprechenden handelsüblichen Isomerenmischungen, beispielsweise im Gewichtsverhältnis 80 : 20, und Mischungen aus Tolyulen-diisocyanaten und Roh-MDI.

Zu Treibmitteln, welche beim erfindungsgemäßen Verfahren verwendet werden, gehört Wasser, das mit Isocyanatgruppen unter Bildung von Kohlendioxid reagiert. Die Wassermengen, die zweckmäßigerweise eingesetzt werden, betragen 0,01 bis 5 Gew.-%, vorzugsweise 0,1 bis 2 Gew.-%, bezogen auf das Gewicht der Polyester-polyol-Polyether-polyol-Mischung.

Andere verwendbare Treibmittel, die gegebenenfalls zusätzlich mitverwendet werden, sind niedrigsiedende Flüssigkeiten, die unter dem Einfluß der exothermen Polyadditionsreaktion verdampfen. Geeignet sind Flüssigkeiten, welche gegenüber den organischen Polyisocyanaten inert sind und Siedepunkte von nicht über 100 °C bei Atmosphärendruck, vorzugsweise zwischen − 40 und + 50 °C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit hängt ab von der Dichte, die man erreichen will, sowie von der verwendeten Wassermenge. Im allgemeinen liefern Mengen von 0,5 bis 30 Gew.-%, vorzugsweise 5 bis 20 Gew.-% bezogen auf das Gewicht der Polyester-polyol-polyether-polyol-Mischung zufriedenstellende Ergebnisse.

Dem schaumfähigen Reaktionsgemisch können ferner Katalysatoren, die die Polyurethanbildung beschleunigen, und gegenenfalls Hilfs- und Zusatzsoffe, wie sie üblicherweise zur Herstellung von Polyurethan-Weichschaumstoffen Anwendung finden, einverbleibt werden. In Betracht kommen beispielsweise oberflächenaktive Stoffe, Flammschutzmittel, Porenregler, Antioxidationsmittel, Hydrolysenschutzmittel, Farbstoffe, Füllstoffe und andere Zusätze.

Geeignete Katalysatoren zur Beschleunigung der Umsetzung zwischen den Polyester-polyol-Polyether-polyol-Mischungen, gegebenenfalls Kettenverlängerungsmitteln, Wasser und den organischen Polyisocyanaten sind beispielsweise tertiäre Amine, wie Dimethylbenzylamin, N,N,N',N'-Tetramethyl-diamino-ethylether, Bis-(dimethylaminopropyl)-harnstoff, N-Methyl-bzw. N-Ethylmorpholin, Dimethylpiperazin, 1,2-Dimethyl imidazol, 1-Aza-bicyclo-(3,3,0)-octan und vorzugsweise Triethylendiamin, Metallsalze, wie Zinn-dioctoat, Bleioctoat, Zinndiethylhexoat und vorzugsweise Zinn-(II) salze und Dibutylzinndilaurat sowie insbesondere Mischungen aus tertiären Aminen und organischen Zinnsalzen. Vorzugsweise verwendet werden 0,5 bis 5 Gew.-% Katalysator auf Basis tertiärer Amine und/oder 0,05 bis 2,5 Gew.-% Metallsalze, bezogen auf das Gewicht der Polyester-polyol-Polyether-polyol-Mischung.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen Polyester-polyol-Polyether-polyol-Mischung angewandt werden.

Zur Verbesserung der Flammbeständigkeit können den erfindungsgemäß hergestellten Polyurethan-Weichschaumstoffen Flammschutzmittel einverleibt werden. Genannt seien beispielsweise Phosphor- und/oder Halogenatome enthaltende Verbindungen, wie Trikresylphosphat, Tris-2-chlorethylphosphat, Tris-chlorpropylphosphat und Tris-2,3-dibrompropylphosphat, anorganische Flammschutzmittel, wie Antimontrioxid, Arsenoxid, Ammoniumphosphat, Ammoniumsulfat u. a. sowie Cyansäurederivate, wie Cyanamid, Dicyandiamid, Guanidin, Guanidinsalze, Biguanid und Melamin. Im allgemeinen hat es sich als vorteilhaft erwiesen, 5 bis 50 Gewischtsteile der genannten Flammschutzmittel für jeweils 100 Gew.-Teile der Polyester-polyol-Polyether-polyol-Mischung zu verwenden.

Nähere Angaben über die oben genannten anderen üblichen Hilfs- und Zusatzstoffe sind der Fachliteratur, beispielsweise der Monographie von J. H. Saunders und K. C. Frisch « High Polymers », Band XVI, Polyurethanes, Teil 1 und 2, Verlag Interscience Publishers 1962 bzw. 1964 zu entnehmen.

Zur Herstellung der Polyurethan-Weichschaumstoffe werden die organischen Polyisocyanate und Gemische aus Polyester-polyol-Polyether-polyol-Mischungen, Wasser und gegebenenfalls Kettenverlängerungsmittel in solchen Mengen zur Umsetzung gebracht, daß das Verhältnis von NCO- : OH-Gruppen 0,9 bis 1,1 : 1, vorzugsweise 1 bis 1,05 : 1 beträgt.

Die Polyurethan-Weichschaumstoffe werden nach dem Prepolymer- und vorzugsweise nach dem one shot-Verfahren hergestellt. Bei Verwendung einer Mischkammer mit mehreren Zulaufdüsen können die Ausgangskomponenten einzeln zugeführt und in der Mischkammer intensiv vermischt weden. Als besonders vorteilhaft hat es sich erwiesen, nach dem Zweikomponenten-Verfahren zu arbeiten und die Polyester-polyol-Polyether-polyol-Mischung, Katalysatoren, Treibmitteln, Hilfs- und Zusatzstoffen zu der Komponente A zu vereinigen und als Komponente B die organischen Polyisocyanate zu verwenden. Vorteilhaft ist hierbei beispielsweise, daß die Komponenten A und B getrennt gelagert, und raumsparend transportiert werden können.

Zur Herstellung der Polyurethan-Weischaumstoffe werden die beschriebenen Ausgangsstofe in den genannten Mengenverhältnissen intensiv bei Temperaturen von 15 bis 60 °C, vorzugsweise 20 bis 35 °C, gemischt und danach die Reaktionsmischung in offenen oder geschlossenen, gegebenenfalls temperierten Formen z. B. nach der blocschaum-, Heiß- oder Kaltformschaumtechnik, aufschäumen gelassen. Die erhaltenen Polyurethan-Weichschaumstoffe besitzen Raumgewichte von ungefähr 15 bis 70 g/Liter., wobei die Schaumstoffe mit höheren Dichten, z. B. von 25 bis 50 g/Liter, vorzugsweise 30 bis 45 g/Liter zur Schallabsorption und als Autositze und mit niederer Dichte, z. B. von 15 bis 25 g/Liter als Rückenlehnen für Sitze Anwendung finden.

Wie bereits dargelegt wurde, weisen die erfindungsgemäß hergestellten flexiblen Polyurethan-Weichschaumstoffe eine sehr gute Hydrolysebeständigkeit auf. Sie besitzen eine hohe Stauchhärte bei gleichzeitig verbessertem Dämpfungsverhalten.

Die Weichschaumstoffe finden Verwendung im Haushaltssektor und in der Möbel-, Bau-, Elektro- und Automobilindustrie.

Die in den Beispielen genannten Teile beziehen sich auf das Gewicht.

Herstellung der Polyester-polyole

Beispiel 1

73,1 Gew.-Teile Adipinsäure, 54,8 Gew.-Teile einer Diolmischung aus 21 Gew.-% Butandiol-1,4, 52 Gew.-% Pentandiol-1,5 und 27 Gew.-% Hexandiol-1,6 und 2,95 Gew.-Teile Trimethylolpropan werden bei Normaldruck unter Abdestillieren des Kondensationswassers bei Temperaturen bis 210 °C verestert. Danach wird die Veresterung nach einer Druckerniedrigung bis ca. 40 mbar zu Ende geführt. Nach Abtrennung von 18,7 Gew.-Teilen Destillat erhält man ein bei Raumtemperatur flüssiges Polyester-polyol mit folgenden Kennzahlen :

| | |
|---|---|
| OH-Zahl : | 49,7 mg KOH/g |
| Säurezahl : | 1 mg KOH/g |
| Viskosität (75 °C) : | 1 800 mPas |
| Jodfarbzahl : | 2 |

Die Polyolmischung enthielt, bezogen auf das Gesamtgewicht 20 Gew.-% Butandiol-1,4 ; 48,4 Gew.-% Pentandiol-1,5 ; 25,6 Gew.-% Hexandiol-1,6 und 5,1 Gew.-% Trimethylolpropan.

## Beispiel 2

78 Gew.-Teile Adipinsäure, 58 Gew.-Teile einer Diolmischung aus 22 Gew.-% Butandiol-1,4, 50 Gew.-% Pentandiol-1,5 und 28 Gew.-% Hexandiol-1,6 und 4,4 Gew.-Teile Trimethylolpropan werden analog den Angaben von Beispiel 1 verestert. Nach Abdestillieren von 19,3 Gew.-Teilen Destillat erhält man ein bei Raumtemperatur flüssiges Polyester-polyol mit folgenden Kennzahlen :

| | |
|---|---|
| OH-Zahl | 63 mg KOH/g |
| Säurezahl | 0,7 mg kOH/g |
| Viskosität (75 °C) : | 1 060 mPas |
| (25 °C) : | 13 040 mPas |
| Jodfarbzahl : | 1-2 |

Die Polyolmischung enthielt, bezogen auf das Gesamtgewicht 20,5 Gew.-% Butandiol-1,4 ; 46,5 Gew.-% Pentandiol-1,5 ; 26 Gew.-% Hexandiol-1,6 und 7,1 Gew.-% Trimethylolpropan.

## Beispiel 3

2 619 Gew.-Teile Adipinsäure, 1 963 Gew.-Teile einer Diolmischung aus 22 Gew.-% Butandiol-1,4, 50 Gew.-% Pentandiol-1,5 und 28 Gew.-% Hexandiol-1,6 und 103 Gew.-Teile Glycerin werden analog den Angaben von Beipiel 1 verestert. Nach Abdestillieren von 680 Gew.-Teilen Destillat erhält man ein bei Raumtemperatur flüssiges Polyester-polyol mit folgenden Kenndaten :

| | |
|---|---|
| OH-Zahl : | 59 mg KOH/g |
| Säurezahl : | 1,1 mg KOH/g |
| Viskosität (75 °C) : | 1 450 mPas |
| (25 °C) : | 18 400 mPas |
| Jodfarbzahl : | 1 |

Die Polyolmischung enthielt, bezogen auf das Gesamtgewicht 20,9 Gew.-% Butandiol-1,4, 47,5 Gew.-% Pentandiol-1,5, 26,6 Gew.-% Hexandiol-1,6 und 5 Gew.-% Glycerin.

## Beispiel 4

50 Gew.-Teile des Polyester-polyols nach Beispiel 1 werden mit 50 Gew.-Teilen eines Polyester-polyols auf Basis Glycerin, Propylenoxid und Ethylenoxid mit der OH-Zahl 42 zu einer klaren Flüssigkeit vermischt.

Die Mischung zeigt auch nach längerer Lagerzeit keine Trübung, Ausscheidung oder Phasentrennung.

100 Gew.-Teile der obengenannten Polyester-polyol-polyether-polyol-Mischung
3,6 Gew.-Teile Wasser
1,5 Gew.-Teile N,N-Dimethylbenzylamin
1,2 Gew.-Teile Schumstabilisator (Niax® L 532 der Union Carbide Corp.) und
42,2 Gew.-Teile Toluylen-diisocyanat (Verhältnis der 2,4- : 2,6-Isomeren 80 : 20)

werden bei 25 °C intensiv vermischt.

Man erhält ein stabiles verschäumungsfähiges Gemisches, das einen Hydrolysestabilen Polyester-polyether-polyurethanschaumstoff mit den in Tabelle 1 zusammengefaßten ausgezeichneten mechanischen Eigenschaften ergibt.

### Vergleichsbeispiel A

Man verfährt analog den Angaben von Beispiel 4, verwendet jedoch 100 Gew.-Teile eines handelsüblichen Polyesterpolyols auf Basis Adipinsäure, Diethylenglykol und Trimethylolpropan mit einer OH-Zahl von 50.

### Vergleichsbeispiel B

Man verfährt analog den Angaben von Beispiel 4, verwendet jedoch 100 Gew.-Teile eines Polyetherpolyols auf Basis Glycerin, Propylenoxid und Ethylenoxid mit der OH-Zahl von 42.

### Tabelle 1

Mechanische Eigenschaften von Polyurethanschaumstoffen nach Beispiel 4 und Vergleichsbeispielen A und B.

| Beispiel / Vergleichsbeispiel | | 4 | A | B |
|---|---|---|---|---|
| Raumgewicht n. DIN 53 420 | $[kg/m^3]$ | 36 | 36 | 35,5 |
| Zugfestigkeit n. DIN 53 571 | [k.Pa] | 185 | 165 | 120 |
| Bruchdehnung n. DIN 53 571 | [%] | 215 | 195 | 180 |
| Stauchhärte n. DIN 53 577 bei 40 % Kompression | [k.Pa] | 4,7 | 4,4 | 4,1 |
| Druckverformungsrest nach DIN 53 572 bei 90 % Kompression | [%] | 6,5 | 7,8 | 5,2 |
| Abfall der Stauchhärte nach 5tägiger Lagerung bei 85°C und max. relativer Luftfeuchtigkeit(nach DIN 53 578) | [%] | 13 | 45 | 12 |

Die Meßergebnisse zeigen, daß der Polyesterschaumstoff nach Vergleichsbeispiel A auf Basis eines handelsüblichen Polyester-polyols innerhalb kurzer Zeit hydrolysiert. Der Abfall der Stauchhärte nach 5 Tagen Einwirkung der maximalen relativen Luftfeuchtigkeit bei 85 °C beträgt bereits 45 %, wohingegen der erfindungsgemäß hergestellte Polyester-polyether-polyurethanschaumstoff fast den gleichen Stauchhärteabfall nach der Feuchtigkeitsalterung wie ein reiner Polyether-polyurethanschaumstoff (Vergleichsbeispiel B) aufweist, darüberhinaus jedoch deutlich verbesserte mechanische Eigenschaften besitzt.

### Beispiel 5

50 Gew.-Teile des Polyester-polyols nach Beispiel 2 werden mit 50 Gew.-Teilen eines Polyetherpolyols auf Basis Glycerin, Propylenoxid und Ethylenoxid mit der Hydroxylzahl von 56 vermischt. Anschließend werden der Mischung

3,5 Gew.-Teile Wasser
0,7 Gew.-Teile Silikonstabilisator (BF 2370 der Firma Goldschmidt, Essen)
0,36 Gew.-Teile Diazabicyclooctan und
0,06 Gew.-Teile Zinn-(II)-octoat einverleibt.

Das erhaltene Gemisch wird bei 25 °C intensiv mit 45,0 Gew.-Teilen Toluylen-diisocyanat (2,4 : 2,6-Isomerenverhältnis 80 : 20) vermischt und in einer Form verschäumt.

Man erhält einen Polyurethanschaumstoff mit den in Tabelle 2 genanten mechanischen Eigenschaften.

### Vergleichsbeispiel C

Man verfährt analog den Angaben von Beispiel 5, verwendet jedoch anstelle der Polyester-polyol-polyether-polyol-Mischung 100 Gew.-Teile des genannten Polyether-polyols auf Basis Glycerin, Propylenoxid und Ethylenoxid mit der OH-Zahl 56.

## Tabelle 2

Mechanische Eigenschaften von Polyurethanschaumstoffen nach Beispiel 5 und Vergleichsbeispiel C nach 15 Minuten Ausheizung der Schaumstoffproben bei 250 °C.

| Beispiel | | 5 | C |
|---|---|---|---|
| Vergleichsbeispiel | | | |
| Raumgewicht nach DIN 53 420 | [kg/m$^3$] | 29 | 29 |
| Zugfestigkeit nach DIN 53 571 | [K.Pa] | 142 | 130 |
| Bruchdehnung nach DIN 53 571 | [%] | 215 | 195 |
| Stauchhärte nach DIN 53 577 bei 40 % Kompression | [K.Pa] | 4,8 | 4,1 |
| Druckverformungsrest nach DIN 53 572 bei 90 % Kompression | [%] | 4,9 | 5,4 |
| Abfall der Stauchhärte nach 5tägiger Lagerung bei 85 °C und max. relativer Luftfeuchtigkeit (nach DIN 53 578) | [%] | 15 | 14 |

Die Meßergebnisse zeigen, daß unter vergleichbaren Verschäumungsbedingungen ein Polyester-polyether-polyurethanschaumstoff erhalten wird, der gegenüber einem reinen Polyether-polyurethanschaumstoff deutlich verbesserte mechanische Eigenschaften, insbesondere der Stauchhärte, Zugfestigkeit und Bruchdehnung bei nahezu gleich guter Hydrolysestabilität besitzt.

Darüber hinaus ergeben sich aufgrund der verschiedenen chemischen Struktur deutliche Unterschiede in den akustischen Isolationseigenschaften zwischen den beiden Polyurethanschaumstoffarten, wie Tabelle 3 zeigt.

## Tabelle 3

Schallschluckverhalten von Polyurethanschaumstoffen nach Beispiel 5 und Vergleichsbeispiel C.

| | | | Beispiel 5 | Vergleichs-beispiel C |
|---|---|---|---|---|
| Schallabsorptionsgrad | | | | |
| bei | 250 Hz | [%] | 30 | 15 |
| | 500 Hz | [%] | 65 | 32 |
| | 750 Hz | [%] | 85 | 55 |

## Beispiel 6

Eine Mischung aus

40 Gew.-Teilen des Polyesters-polyols nach Beispiel 2,

60 Gew.-Teilen eines Polyether-polyols auf Basis Glycerin, Propylenoxid und Ethylenoxid mit der OH-Zahl 42, hergestellt durch Copolymerisation eines Propylenoxid-Ethylenoxidgemisches im Heteric-Verfahren,

3,0 Gew.-Teilen Wasser

1,0 Gew.-Teilen Silikonstabilisator (BF 2370 der Firma Goldschmidt, Essen)

0,3 Gew.-Teilen Diazabicyclooctan und

0,2 Gew.-Teilen Zinn-(II)-octoact wird mit

38,5 Gew.-Teilen Toluylen-diisocyanat (2,4- : 2,6-Isomerenverhältnis) bei 25 °C intensiv vermischt und verschäumt.

Die mechanischen Eigenschaften des erhaltenen Polyester-polyether-polyurethanschaumstoffs sind in Tabelle 4 zusammengefaßt.

### Vergleichsbeispiel D

Man verfährt analog Beispiel 6, verwendet jedoch anstelle der Polyester-polyol-polyether-polyol-Mischung 100 Gew.-Teile des genannten Polyether-polyols.

### Tabelle 4

Mechanische Eigenschaften der erhaltenen Polyurethanschaumstoffe gemäß Beispiel 6 und Vergleichsbeispiel D

| Beispiel | | | 6 | D |
|---|---|---|---|---|
| Vergleichsbeispiel | | | | |
| Raumgewicht nach DIN 53 420 | [kg/m$^3$] | | 33,1 | 31,9 |
| Zugfestigkeit nach DIN 53 571 | [K.Pa] | | 182 | 135 |
| Bruchdehnung nach DIN 53 571 | [%] | | 210 | 180 |
| Stauchhärte nach DIN 53 577 bei 40 % Kompression | [K.Pa] | | 3,8 | 3,4 |
| Druckverformungsrest nach DIN 53 572 bei 90 % Kompression | [%] | | 4,5 | 4,6 |

Die Meßergebnisse der Polyurethanschaumstoffkörper zeigen eine höhere Zugfestigkeit, Bruchdehnung und Stauchhärte bei den erfindungsgemäß hergestellten Polyester-polyether-polyurethanschaumstoffen bei sonst vergleichbaren mechanischen Eigenschaften im Vergleich zu Polyetherpolyurethanschaumstoffen.

### Beispiel 7

Eine Mischung aus

20 Gew.-Teilen des Polyester-polyols nach Beispiel 2
80 Gew.-Teilen eines Polyether-polyols auf Basis Glycerin, Propylenoxid und Ethylenoxid mit der OH-Zahl 35 und einem Anteil von ungefähr 80 % primären Hydroxylgruppen, hergestellt durch Blockpolymerisation von Ethylenoxid und Propylenoxid,
2,8 Gew.-Teilen Wasser
0,6 Gew.-Teilen Silikonstabilisator (B 4113 der Firma Goldschmidt, Essen)
0,6 Gew.-Teilen Diazabicyclooctan und
0,3 Gew.-Teilen Dimethylethanolamin
wird mit einem Gemisch aus
29,4 Gew.-Teilen Toluylen-diisocyanat (2,4- : 2,6-Isomerenverhältnis 80 : 20) und
7,4 Gew.-Teilen einer Mischung aus Diphenylmethandiisocyanaten und Polyphenyl-polymethylen-polyisocyanaten (roh-MDI)

bei 25 °C intensiv vermischt, in eine auf 45 °C erwärmte Aluminiumform mit hilfe einer Hochdruckverschäumungsmaschine eingetragen und ohne weitere Wärmezufuhr ausreagieren lassen.

Man erhält einen Kaltformschaumstoff mit den in Tabelle 5 zusammengefaßten mechanischen Eigenschaften.

### Vergleichsbeispiel E

Man verfährt analog Beispiel 7, verwendet jedoch anstelle der Polyester-polyol-polyester-polyol-Mischung 100 Gew.-Teile des dort beschriebenen Polyether-polyols.

(Siehe Tabelle 5 Seite 11 f.)

Tabelle 5

Mechanische Eigenschaften der erhaltenen Kaltformschaumstoffe.

| Beispiel | | 7 | E |
|---|---|---|---|
| Vergleichsbeispiel | | | |
| Raumgewicht nach DIN 53 420 | [kg/m$^3$] | 44,0 | 44,5 |
| Zugfestigkeit nach DIN 53 571 | [K.Pa] | 95 | 72 |
| Bruchdehnung nach DIN 53 571 | [%] | 141 | 130 |
| Stauchhärte nach DIN 53 577 bei 40 % Kompression | [K.Pa] | 3,6 | 3,0 |
| Elastizität nach ASTM D 2406-73 | [%] | 56,3 | 59,8 |

Die erhaltenen Meßwerte zeigen, daß die mechanischen Eigenschaften, insbesondere die Zugfestigkeit, Bruchdehnung und Stauchhärte bei den Polyester-polyether-polyurethanschaumstoffen angehoben wurden.

Beispiel 8

Verfährt man analog den Angaben von Beispiel 7, verwendet jedoch anstelle der dort genannten Polyester- und Polyether-polyolmengen

50 Gew.-Teile Polyester-polyol nach Beispiel 2 und
50 Gew.-Teile Polyether-polyol, wie in Beispiel 7 beschrieben,

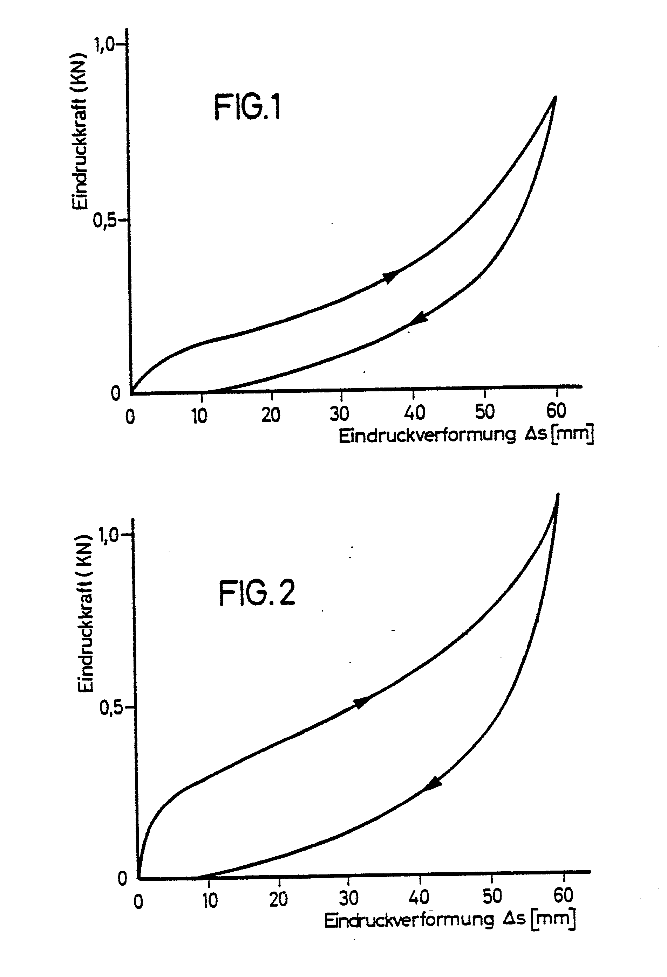

so erhält man einen Polyester-polyether-polyurethanschaumstoff mit einem besonders guten Dämpfungsverhalten, wie man aus dem nachstehend abgebildeten Verformungsdiagramm (Fig. 2) entnehmen kann.

Fig. 1 zeigt das Verformungsdiagramm eines reinen Polyether-Polyurethanschaumstoffes auf Basis von 100 Gew.-Teilen des in Beispiel 7 beschriebenen Polyether-polyols unter sonst gleichen Verfahrensbedingungen.

Aufgrund der guten Dämpfungseigenschaften bei gleichzeitig erhöhter Tragfähigkeit ergeben sich bisher nicht erreichbare Eigenschaften vor allem für Fahrzeugsitze sowie zur Erhöhung der inneren Sicherheit im Kraftfahrzeug, z. B. als Schutzpolsterungen.

**Patentansprüche** (für die Vertragsstaaten : BE, CH, DE, FR, GB, IT, LI, NL, SE)

1. Verfahren zur Herstellung von flexiblen Polyurethan-Weichschaumstoffen durch Umsetzung von organischen Polyisocyanaten, Polyhydroxylverbindungen und gegebenenfalls Kettenverlängerungsmitteln in Gegenwart von Katalysatoren und Treibmitteln sowie gegebenenfalls Hilfs- und Zusatzstoffen, dadurch gekennzeichnet, daß man als Polyhydroxylverbindungen Mischungen verwendet aus

a) flüssigen Polyester-polyolen mit Hydroxylzahlen von 40 bis 80 und Molekulargewichten von 1 500 bis 5 000, die hergestellt werden durch Polykondensation von organischen Dicarbonsäuren mit einer Polyolmischung, die bezogen auf das Gesamtgewicht enthält :

10 bis 50 Gew.-% Butandiol-1,4
30 bis 60 Gew.-% Pentandiol-1,5
8 bis 35 Gew.-% Hexandiol-1,6 und
2 bis 15 Gew.-% mindestens eines Triols und

b) di- bis tetrafunktionellen Polyether-polyolen mit Molekulargewichten von 1 500 bis 6 000.

2. Verfahren nach Anspruch 1, dadurch gekennzeichnet, daß man als Polyhydroxylverbindungen Mischungen aus

a) 5 bis 50 Gew.-%, vorzugsweise 10 bis 20 Gew.-% eines flüssigen Polyester-polyols (a) und
b) 95 bis 50 Gew.-%, vorzugsweise 90 bis 80 Gew.-% eines di- bis tetrafunktionellen Polyether-polyols (b) verwendet, wobei die Gew.-% bezogen sind auf das Gesamtgewicht der Komponenten (a) und (b).

3. Verfahren nach Anspruch 1, dadurch gekennzeichnet, daß man als Aufbaukomponente zur Herstellung der flüssigen Polyester-polyole als Triole Trimethylolpropan und/oder Glycerin verwendet.

4. Verfahren nach Anspruch 1, dadurch gekennzeichnet, daß man als Aufbaukomponente zur Herstellung der flüssigen Polyester-polyole als organische Dicarbonsäure Adipinsäure verwendet.

5. Verfahren nach Anspruch 1, dadurch gekennzeichnet, daß man als Polyether-polyole (b) di- und/oder trifunktionelle Polyoxypropylen-Polyoxyethylen-polyole mit Hydroxylzahlen von 28 bis 60 verwendet.

6. Verfahren nach Anspruch 1, dadurch gekennzeichnet, daß man als Polyhydroxylverbindungen Mischungen verwendet aus

a) 10 bis 20 Gew.-%, bezogen auf das Gesamtgewicht der Komponenten (a) und (b) eines flüssigen Polyester-polyols mit einer Hydroxylzahl von 40 bis 80, hergestellt durch Polykondensation von organischen Dicarbonsäuren mit einer Polyolmischung, die bezogen auf das Gesamtgewicht enthält :

10 bis 50 Gew.-% Butandiol-1,4
30 bis 60 Gew.-% Pentandiol-1,5
8 bis 35 Gew.-% Hexandiol-1,6 und
2 bis 15 Gew.-% Glycerin und/oder Trimethylolpropan und

b) 90 bis 80 Gew.-%, bezogen auf das Gesamtgewicht der Komponenten (a) und (b) eines di- und/oder trifunktionellen Polyoxypropylen-Polyoxyethylen-polyols mit einer Hydroxylzahl von 28 bis 60.

7. Polyester-polyol-Polyether-polyol-Mischungen, die im wesentlichen bestehen aus

a) 10 bis 20 Gew.-%, bezogen auf das Gesamtgewicht der Komponenten (a) und (b) eines flüssigen Polyester-polyols mit einer Hydroxylzahl von 40 bis 80, hergestellt durch Polykondensation von Adipinsäure mit einer Polyolmischung, die bezogen auf das Gesamtgewicht enthält :

10 bis 50 Gew.-% Butandiol-1,4
30 bis 60 Gew.-% Pentandiol-1,5
8 bis 35 Gew.-% Hexandiol-1,6 und
2 bis 15 Gew.% Glycerin und/oder Trimethylolpropan und

b) 90 bis 80 Gew.%, bezogen auf das Gesamtgewicht der Komponenten (a) und (b) eines Glycerin und/oder Trimethylolpropan initiierten Polyoxypropylen-Polyoxyethylen-triols mit einer Hydroxylzahl von 28 bis 60.

**Patentansprüche** (für den Vertragsstaat AT)

1. Verfahren zur Herstellung von flexiblen Polyurethan-Weichschaumstoffen durch Umsetzung von organischen Polyisocyanaten, Polyhydroxylverbindungen und gegebenenfalls Kettenverlängerungsmitteln in Gegenwart von Katalysatoren und Treibmitteln sowie gegebenenfalls Hilfs- und Zusatzstoffen, dadurch gekennzeichnet, daß man als Polyhydroxylverbindungen Mischungen verwendet aus

a) flüssigen Polyester-polyolen mit Hydroxylzahlen von 40 bis 80 und Molekulargewichten von 1 500 bis 5 000, die hergestellt werden durch Polykondensation von organischen Dicarbonsäuren mit einer Polyolmischung, die bezogen auf das Gesamtgewicht enthält :

10 bis 50 Gew.-% Butandiol-1,4
30 bis 60 Gew.-% Pentandiol-1,5
8 bis 35 Gew.-% Hexandiol-1,6 und
2 bis 15 Gew.-% mindestens eines Triols und
b) di- bis tetrafunktionellen Polyether-polyolen mit Molekulargewichten von 1 500 bis 6 000.

2. Verfahren nach Anspruch 1, dadurch gekennzeichnet, daß man als Polyhydroxylverbindungen Mischungen aus

a) 5 bis 50 Gew.-%, vorzugsweise 10 bis 20 Gew.-% eines flüssigen Polyester-polyols (a) und
b) 95 bis 50 Gew.-%, vorzugsweise 90 bis 80 Gew.-% eines di- bis tetrafunktionellen Polyether-polyols (b)

12

verwendet, wobei die Gew.-% bezogen sind auf das Gesamtgewicht der Komponenten (a) und (b).

3. Verfahren nach Anspruch 1, dadurch gekennzeichnet, daß man als Aufbaukomponente zur Herstellung der flüssigen Polyester-polyole als Triole Trimethylolpropan und/oder Glycerin verwendet.

4. Verfahren nach Anspruch 1, dadurch gekennzeichnet, daß man als Aufbaukomponente zur Herstellung der flüssigen Polyester-polyole als organische Dicarbonsäure Adipinsäure verwendet.

5. Verfahren nach Anspruch 1, dadurch gekennzeichnet, daß man als Polyether-polyole (b) di- und/oder trifunktionelle Polyoxypropylen-Polyoxyethylen-polyole mit Hydroxylzahlen von 28 bis 60 verwendet.

6. Verfahren nach Anspruch 1, dadurch gekennzeichnet, daß man als Polyhydroxylverbindungen Mischungen verwendet aus

a) 10 bis 20 Gew.-%, bezogen auf das Gesamtgewicht der Komponenten (a) und (b) eines flüssigen Polyester-polyols mit einer Hydroxylzahl von 40 bis 80, hergestellt durch Polykondensation von organischen Dicarbonsäuren mit einer Polyolmischung, die bezogen auf das Gesamtgewicht enthält :

10 bis 50 Gew.-% Butandiol-1,4
30 bis 60 Gew.-% Pentandiol-1,5
8 bis 35 Gew.-% Hexandiol-1,6 und
2 bis 15 Gew.-% Glycerin und/oder Trimethylolpropan und

b) 90 bis 80 Gew.-%, bezogen auf das Gesamtgewicht der Komponenten (a) und (b) eines di- und/oder trifunktionellen Polyoxypropylen-Polyoxyethylen-polyols mit einer Hydroxylzahl von 28 bis 60.

**Claims** (for the Contracting States : BE, CH, DE, FR, GB, IT, LI, NL, SE)

1. A process for the preparation of resilient and flexible polyurethane foams by reacting organic polyisocyanates, polyhydroxyl compounds and optional chain extenders in the presence of catalysts and blowing agents as well as optional auxiliaries and additives, wherein the polyhydroxyl compounds used are mixtures of

a) liquid polyester polyols with hydroxyl numbers of 40 to 80 and molecular weights of 1 500 to 5 000 which are produced by polycondensation of organic dicarboxylic acids with a polyol mixture which contains, based on the total weight :

10 to 50 percent by weight of 1,4-butanediol,
30 to 60 percent by weight of 1,5-pentanediol,
8 to 35 percent by weight of 1,6-hexanediol, and
2 to 15 percent by weight of at least one triol, and

b) di- to tetra-functional polyether polyols having molecular weights of 1 500 to 6 000.

2. A process as claimed in claim 1, wherein the polyhydroxyl compounds used are mixtures of

a) 5 to 50 percent by weight, preferably 10 to 20 percent by weight, of a liquid polyester polyol (a), and

b) 95 to 50 percent by weight, preferably 90 to 80 percent by weight, of a di- to tetra-functional polyether polyol (b).

3. A process as claimed in claim 1, wherein the triols used as components for the preparation of the liquid polyester polyols are trimethylolpropane and/or glycerine.

4. A process as claimed in claim 1, wherein the organic dicarboxylic acid used as component for the preparation of the liquid polyester polyols is adipic acid.

5. A process as claimed in claim 1, wherein di- and/or trifunctional polyoxypropylene-polyoxyethylene polyols having hydroxyl numbers of 28 to 60 are used as the polyether polyols (b).

6. A process as claimed in claim 1, wherein the polyhydroxyl compounds used are mixtures of

a) 10 to 20 percent by weight, based on the total weight of components (a) and (b), of a liquid polyester polyol having a hydroxyl number of 40 to 80 and produced by the polycondensation of organic dicarboxylic acids with a polyol mixture which contains, based on the total weight,

10 to 50 percent by weight of 1,4-butanediol,
30 to 60 percent by weight of 1,5-pentanediol,
8 to 35 percent by weight of 1,6-hexanediol, and
2 to 15 percent by weight of glycerine and/or trimethylolpropane, and

b) 90 to 80 percent by weight, based on the total weight of components (a) and (b), of a di- and/or tri-functional polyoxypropylene-polyoxyethylene polyol having a hydroxyl number of 28 to 60.

7. Polyester polyol/polyether polyol mixtures which consist essentially of

a) 10 to 20 percent by weight, based on the total weight of components (a) and (b), of a liquid polyester polyol having a hydroxyl number of 40 to 80 and produced by polycondensation of adipic acid with a polyol mixture which contains, based on the total weight,

10 to 50 percent by weight of 1,4-butanediol,
30 to 60 percent by weight of 1,5-pentanediol,
8 to 35 percent by weight of 1,6-hexanediol, and
2 to 15 percent by weight of glycerine and/or trimethylolpropane, and

b) 90 to 80 percent by weight, based on the total weight of components (a) and (b), of a glycerine- and/or trimethylolpropane-initiated polyoxypropylene-polyoxyethylene triol having a hydroxyl number of 28 to 60.


**Claims** (for the Contracting State AT)

1. A process for the preparation of resilient and flexible polyurethane foams by reacting organic polyisocyanates, polyhydroxyl compounds and optional chain extenders in the presence of catalysts and blowing agents as well as optional auxiliaries and additives, wherein the polyhydroxyl compounds used are mixtures of
a) liquid polyester polyols with hydroxyl numbers of 40 to 80 and molecular weights of 1 500 to 5 000 which are produced by polycondensation of organic dicarboxylic acids with a polyol mixture which contains, based on the total weight :

10 to 50 percent by weight of 1,4-butanediol,
30 to 60 percent by weight of 1,5-pentanediol,
8 to 35 percent by weight of 1,6-hexanediol, and
2 to 15 percent by weight of at least one triol, and
b) di- to tetra-functional polyether polyols having molecular weights of 1 500 to 6 000.

2. A process as claimed in claim 1, wherein the polyhydroxyl compounds used are mixtures of

a) 5 to 50 percent by weight, preferably 10 to 20 percent by weight, of a liquid polyester polyol (a), and
b) 95 to 50 percent by weight, preferably 90 to 80 percent by weight, of a di- to tetra-functional polyether polyol (b).

3. A process as claimed in claim 1, wherein the triols used as components for the preparation of the liquid polyester polyols are trimethylolpropane and/or glycerine.

4. A process as claimed in claim 1, wherein the organic dicarboxylic acid used as component for the preparation of the liquid polyester polyols is adipic acid.

5. A process as claimed in claim 1, wherein di- and/or trifunctional polyoxypropylene-polyoxyethylene polyols having hydroxyl numbers of 28 to 60 are used as the polyether polyols (b).

6. A process as claimed in claim 1, wherein the polyhydroxyl compounds used are mixtures of

a) 10 to 20 percent by weight, based on the total weight of components (a) and (b), of a liquid polyester polyol having a hydroxyl number of 40 to 80 and produced by the polycondensation of organic dicarboxylic acids with a polyol mixture which contains, based on the total weight,

10 to 50 percent by weight of 1,4-butanediol,
30 to 60 percent by weight of 1,5-pentanediol,
8 to 35 percent by weight of 1,6-hexanediol, and
2 to 15 percent by weight of glycerine and/or trimethylolpropane, and

b) 90 to 80 percent by weight, based on the total weight of components (a) and (b), of a di- and/or trifunctional polyoxypropylene-polyoxyethylene polyol having a hydroxyl number of 28 to 60.

# 0 056 121

**Revendications** (pour les Etats contractants : BE, CH, DE, FR, GB, IT, LI, NL, SE)

1. Procédé de préparation de mousses souples flexibles en polyuréthanne par réaction de polyisocyanates organiques et de composés polyhydroxylés, ainsi qu'éventuellement d'agents d'allongement des chaînes, en présence de catalyseurs et d'agents porogènes et éventuellement d'additifs et d'adjuvants, caractérisé en ce que l'on emploie en tant que composés polyhydroxylés des mélanges constitués

a) de polyester-polyols liquides avec des poids moléculaires de 1 500 à 5 000 et des indices d'hydroxyle de 40 à 80, préparés par une polycondensation d'acides dicarboxyliques organiques et d'un mélange de polyols contenant (pourcentages en poids)

10 à 50 % en poids de butane-diol-1,4
30 à 60 % en poids de pentane-diol-1,5
8 à 35 % en poids d'hexane-diol-1,6 et
2 à 15 % en poids d'au moins un triol, et

b) de polyéther-polyols di- à tétra-fonctionnels avec des poids moléculaires de 1 500 à 6 000.

2. Procédé suivant la revendication 1, caractérisé en ce que l'on emploie comme composés polyhydroxylés des mélanges

a) de 5 à 50 % en poids et de préférence de 10 à 20 % en poids d'un polyester-polyol liquide (a) et
b) de 95 à 50 % en poids et de préférence de 90 à 80 % en poids d'un polyéther-polyol di- à tétra-fonctionnel (b), les pourcentages en poids se rapportant à la somme des poids des composants (a) et (b).

3. Procédé suivant la revendication 1, caractérisé en ce que les triols utilisés pour la préparation des polyester-polyols liquides sont choisis parmi le triméthylolpropane et (ou) la glycérine.

4. Procédé suivant la revendication 1, caractérisé en ce que l'acide dicarboxylique organique utilisé pour la préparation des polyester-polyols liquides est l'acide adipique.

5. Procédé suivant la revendication 1, caractérisé en ce que les polyéther-polyols (b) sont choisis parmi les polyoxypropylène-polyoxyéthylène-polyols di- et(ou) trifonctionnels avec des indices d'hydroxyle de 28 à 60.

6. Procédé suivant la revendication 1, caractérisé en ce que l'on emploie comme composés polyhydroxylés des mélanges composés

a) de 10 à 20 % en poids par rapport au poids total des composants (a) et (b) d'un polyester-polyol liquide avec un indice d'hydroxyle de 40 à 80, préparé par une polycondensation d'acides dicarboxyliques organiques et d'un mélange de polyols contenant (pourcentages par rapport au poids total) :

10 à 50 % en poids de butane-diol-1,4
30 à 60 % en poids de pentane-diol-1,5
8 à 35 % en poids d'hexane-diol-1,6 et
2 à 15 % en poids de glycérine et(ou) de triméthylol-propane, et

b) 90 à 80 % en poids par rapport au poids total des composants (a) et (b) d'un polyoxypropylène-polyoxyéthylène-polyol di- et(ou) tri-fonctionnel avec un indice d'hydroxyle de 28 à 60.

7. Mélanges de polyester-polyols/polyéther-polyols, composés essentiellement de

a) 10 à 20 % en poids par rapport au poids total des composants (a) et (b) d'un polyester-polyol liquide avec un indice d'hydroxyle de 40 à 80, préparé par une polycondensation de l'acide adipique avec un mélange de polyols, comprenant (pourcentages par rapport au poids total) :

10 à 50 % en poids de butane-diol-1,4
30 à 60 % en poids de pentane-diol-1,5
8 à 35 % en poids d'hexane-diol-1,6 et
2 à 15 % en poids de glycérine et(ou) de triméthylol-propane et

b) 90 à 80 % en poids par rapport au poids total des composants (a) et (b) d'un polyoxypropylène-polyoxyéthylène-triols dérivé de la glycérine et(ou) du triméthylol-propane avec un indice d'hydroxyle de 28 à 60.

**Revendications** (pour l'Etat contractant AT)

1. Procédé de préparation de mousses souples flexibles en polyuréthanne par réaction de polyisocyanates organiques et de composés polyhydroxylés, ainsi qu'éventuellement d'agents d'allongement des chaînes, en présence de catalyseurs et d'agents porogènes et éventuellement d'additifs et d'adjuvants, caractérisé en ce que l'on emploie en tant que composés polyhydroxylés des mélanges constitués

a) de polyester-polyols liquides avec des poids moléculaires de 1 500 à 5 000 et des indices d'hydroxyle de 40 à 80, préparés par une polycondensation d'acides dicarboxyliques organiques et d'un mélange de polyols contenant (pourcentages en poids)

10 à 50 % en poids de butane-diol-1,4
30 à 60 % en poids de pentane-diol-1,5
8 à 35 % en poids d'hexane-diol-1,6 et
2 à 15 % en poids d'au moins un triol, et

b) de polyéther-polyols di- à tétra-fonctionnels avec des poids moléculaires de 1 500 à 6 000.

2. Procédé suivant la revendication 1, caractérisé en ce que l'on emploie comme composés polyhydroxylés des mélanges

a) de 5 à 50 % en poids et de préférence de 10 à 20 % en poids d'un polyester-polyol liquide (a) et
b) de 95 à 50 % en poids et de préférence de 90 à 80 % en poids d'un polyéther-polyol di- à tétra-fonctionnel (b), les pourcentages en poids se rapportant à la somme des poids des composants (a) et (b).

3. Procédé suivant la revendication 1, caractérisé en ce que les triols utilisés pour la préparation des polyester-polyols liquides sont choisis parmi le triméthylolpropane et(ou) la glycérine.
4. Procédé suivant la revendication 1, caractérisé en ce que l'acide dicarboxylique organique utilisé pour la préparation des polyester-polyols liquides est l'acide adipique.
5. Procédé suivant la revendication 1, caractérisé en ce que les polyéther-polyols (b) sont choisis parmi les polyoxypropylène-polyoxyéthylène-polyols di- et(ou) trifonctionnels avec des indices d'hydroxyle de 28 à 60.
6. Procédé suivant la revendication 1, caractérisé en ce que l'on emploie comme composés polyhydroxylés des mélanges composés
a) de 10 à 20 % en poids par rapport au poids total des composants (a) et (b) d'un polyester-polyol liquide avec un indice d'hydroxyle de 40 à 80, préparé par une polycondensation d'acides dicarboxyliques organiques et d'un mélange de polyols contenant (pourcentages par rapport au poids total) :

10 à 50 % en poids de butane-diol-1,4
30 à 60 % en poids de pentane-diol-1,5
8 à 35 % en poids d'hexane-diol-1,6 et
2 à 15 % en poids de glycérine et(ou) de triméthylol-propane, et

b) 90 à 80 % en poids par rapport au poids total des composants (a) et (b) d'un polyoxypropylène-polyoxyéthylène-polyol di- et(ou) tri-fonctionnel avec un indice d'hydroxyle de 28 à 60.

FIG.1

FIG.2